(19) Europäisches Patentamt
European Patent Office
Office européen des brevets

(11) **EP 1 930 889 A1**

(12) **EUROPEAN PATENT APPLICATION**

(43) Date of publication:
**11.06.2008 Bulletin 2008/24**

(51) Int Cl.:
**G11B 7/13** (2006.01)    **G11B 7/09** (2006.01)
**G11B 7/00** (2006.01)    **G11B 7/125** (2006.01)

(21) Application number: **07023463.8**

(22) Date of filing: **04.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **06.12.2006 JP 2006329009**

(71) Applicant: **Funai Electric Co., Ltd.**
**Daito-shi**
**Osaka 574-0013 (JP)**

(72) Inventor: **Kamioka, Yuichi**
**Daito-shi,**
**Osaka 574-0013 (JP)**

(74) Representative: **Erny, Tobias**
**Beetz & Partner**
**Patentanwälte**
**Steinsdorfstrasse 10**
**D-80538 München (DE)**

(54) **Optical disc apparatus with compensation of photo-detector signal offset**

(57)    An optical disc apparatus (4) includes: a light source unit (22) in which a plurality of light emitting points that emit lights having different wavelengths each other are formed in vicinity; a condenser lens (31) which condenses the light emitted from the light source unit (22) on a recording layer (20a,20b) of the optical disc (20); a photo detecting portion (33) which receives the light reflected by the recording layer (20a,20b) of the optical disc (20), a plurality of photo receiving regions (51,52) are formed on the photo detecting portion (33) to receive the reflected light in separate positions according to the respective wavelengths which are emitted from the light source unit (22); and a calculation processing portion (61), if a first photo receiving region (52) is a photo receiving region which is essentially used to obtain a servo signal at reproduction of an optical disc (20) that has a plurality of recording layers (20a,20b) and a second photo receiving region (51) is a photo receiving region not needed to be used essentially to obtain the servo signal among the plurality of photo receiving regions (51,52), the calculation processing portion (61) performs a prescribed calculating process using a signal that is detected in the first photo receiving region (52) and a signal that is detected in the second photo receiving region (51) to perform correction of the signal that is detected in the first photo receiving region (52) at the reproduction of the optical disc (20) that has a plurality of recording layers (20a,20b).

FIG.4

EP 1 930 889 A1

**Description**

**BACKGROUND OF THE INVENTION**

Field of the Invention

The present invention relates to an optical disc apparatus which can perform at least reproducing of optical disc, in particular, the present invention relates to an optical disc apparatus which can eliminate influence of stray light that is generated in a case when an optical disc having a plurality of recording layers is reproduced.

Description of Related Art

Optical discs such as a compact disc (hereinafter referred to as a CD), and a digital versatile disc (hereinafter referred to as a DVD) has become popular. Further, recently optical disc which is capable of high density recording such as a HD-DVD, a Blu-lay disc (hereinafter referred to as a BD) and the like whose recording density is heightened in comparison with a CD and a DVD, is put into practical use. In these optical discs, a multilayer optical disc in which a plurality of recording layers are disposed in a thickness direction in order to increase recording capacity further, has been developed.

By the way, we know a phenomenon in which reflected light enters into a photo detector as stray light from an adjoining recording layer of a recording layer to be reproduced, when the multilayer optical disc is reproduced. An explanation will be given taking a case of a double layer optical disc as an example, when information which is recorded on a first layer of the recording layers is reproduced, not only reflected light from the first recording layer but also reflected light from a second recording layer is input as the stray light to a photo detector. On the other hand, when information which is recorded on the second recording layer is reproduced, not only the reflected light from the second recording layer but also the reflected light from the first recording layer is input as the stray light to the photo detector.

In this case because a signal which is detected by the photo detector includes light information that is other than light information which should be essentially obtained, difference from an actual value is generated. As a result, it causes a problem that servo action becomes inadequate or the like. Technology to eliminate such influence of the stray light has been investigated heretofore and it is disclosed in, for example, JP-A-2005-353252 or JP-A-2004-303403.

In JP-A-2005-353252 or JP-A-2004-303403, a light receiving portion to receive reflected light (stray light) from an adjoining recording layer of a recording layer which is a target of reproducing or recording (a recording layer different from a recording layer that is a target of reproducing or recording) is provided as well as a light receiving portion to receive reflected light from the recording layer which is a target of reproducing (or reproducing and recording). Then, the technology is made such that the influence of the stray light is eliminated using detected signal which is detected by the light receiving portion that is provided specially to receive the stray light for calculating process.

However, in a structure that is disclosed in JP-A-2005-353252 or JP-A-2004-303403, it is necessary that the special detecting means is provided to detect the stray light. As a result, it has a problem such as increases of manufacturing cost of the optical disc apparatus to reproduce or to record and reproduce the multilayer optical disc.

For this stand point, for example, a method by which the stray light from the optical disc is shielded by arrangement of a diffracting element nearby an objective lens which condenses light that is emitted from the light source on the recording layer of the optical disc is conceivable other than providing the special detecting means to detect the stray light. However, in this case, an optical element is added to an optical system which is included in the optical disc apparatus, it causes problems that number of parts is increased, load for adjustment of the optical system becomes larger, and the like.

SUMMARY OF THE INVENTION

In view of the above described points, it is an object of the present invention to provide an optical disc apparatus which can eliminate influence of stray light which is reflected light from a recording layer different from a reproducing target recording layer without adding any photo receiving portion or optical element newly, when the reproducing of a multilayer optical disc is performed.

To attain the above described object, an optical disc apparatus which can perform reproducing of a plurality of kinds of optical discs in accordance with the present invention is characterized by including: a light source unit in which a plurality of light emitting points that emit lights having different wavelengths each other are formed in vicinity; a condenser lens which condenses the light emitted from the light source unit on a recording layer of the optical disc; a photo detecting portion which receives the light condensed by the condenser lens and then reflected by the recording layer, a plurality of photo receiving regions are formed on the photo detecting portion to receive the reflected light in separate positions according to the respective wavelengths which are emitted from the light source unit; and a calculation processing portion, if a first photo receiving region is a photo receiving region which is essentially used to obtain a servo signal at reproduction of an optical disc that has a plurality of recording layers and a second photo receiving region is a photo receiving region not needed to be used essentially to obtain the servo signal among the plurality of photo receiving regions, the calculation processing portion performs a prescribed calculating process using a signal that is detected in the first photo receiving region and a signal that is detected in the second photo receiving region to perform correction of the signal that is detected in the first photo receiving region at the reproduction of the optical disc that has a plurality of recording layers.

According to the invention, the apparatus has a structure in which the calculation processing portion performs correction of a signal that is obtained in a photo receiving region which is essentially used to obtain a servo signal by a signal which is detected in a photo receiving region (to receive only stray light) not needed to be used essentially to obtain the servo signal, when a multilayer optical disc is reproduced. As a result it can suppress an improper servo action of the optical disc apparatus by a servo signal disturbed by influence of the stray light which is reflected light from a recording layer different from a reproducing target recording layer. Further, because the apparatus has a structure in which the influence of the stray light is eliminated using a photo receiving region which is essential to perform reproducing of a plurality of kinds of optical discs but not needed to be used essentially to obtain the servo signal in reproducing, the structure of the optical disc apparatus which can eliminate the influence of the stray light can be simple. In addition, it becomes possible to manufacture the apparatus with low cost.

Further, it is preferable that in the optical disc apparatus with the above described structure, the light which is emitted from the light source unit is divided into a main beam and a sub beam and the beams are input to the condenser lens, each of the plurality of photo receiving regions is formed of a plurality of detecting cell groups to make it possible to receive the main beam and the sub beam separately, and the prescribed calculating process by the calculation processing portion is performed using only the signal that is detected in the detecting cell which receives the sub beam.

According to the invention, the structure of the apparatus does not become complicated because the influence of the stray light is eliminated only for the detecting cell about which the influence of the stray light should be especially eliminated.

Further, it is preferable that in the optical disc apparatus with the above described structure, the light source unit is a two wavelength laser and two of the photo receiving regions are formed in the photo detecting portion.

According to the invention, an optical disc apparatus which can eliminate the influence of the stray light that is generated in a multilayer optical disc, is easy to be realized because the apparatus has a structure in which two wavelength laser that is easy to acquire, is utilized as the light source unit.

In addition, it is preferable that the optical disc apparatus with the above described structure further includes another light source which emits light having different wavelength than the light source unit, in which the photo detecting portion is formed to receive the light which is emitted from the another light source and reflected by the recording layer in any one of the two photo receiving regions, and reproducing of the optical disc that has a plurality of recording layers is performed using at least the light which is emitted from the another light source.

According to the invention, an optical disc apparatus which can perform reproducing of information of three kinds of optical discs, for example, a BD, a DVD, a CD and the like and can eliminate the influence of the stray light that is generated in a multilayer optical disc is easy to be realized.

BRIEF DESCRIPTION OF THE DRAWINGS

Fig. 1 is a block diagram to show a structure of an optical disc apparatus according to the present embodiment.
Fig. 2 is a schematic diagram to show a structure of an optical system of an optical pickup which is included in the optical disc apparatus according to the present embodiment.
Fig. 3 is a schematic front view of a photo detector which is included in the optical disc apparatus according to the present embodiment when viewed from a detecting surface side.
Fig. 4 is a diagram to show a state of light spot which is formed by reflected light from the optical disc on the photo detector when the optical disc apparatus according to the present embodiment reproduces various kinds of optical discs with which the apparatus is compatible.
Fig. 5 is a schematic diagram to show a structure of a part of an offset eliminating calculation circuit which is included in the photo detector according to the present embodiment.
Fig. 6 is a diagram to explain switching of a switch which is included in an offset eliminating calculation circuit according to the present embodiment.

DETAILED DESCRIPTION OF THE PREFERRED EMBODIMENTS

Hereinafter, content of the present invention will be explained in detail, however, embodiment described here is mere one example, and the present invention should not be limited to the embodiment shown here.

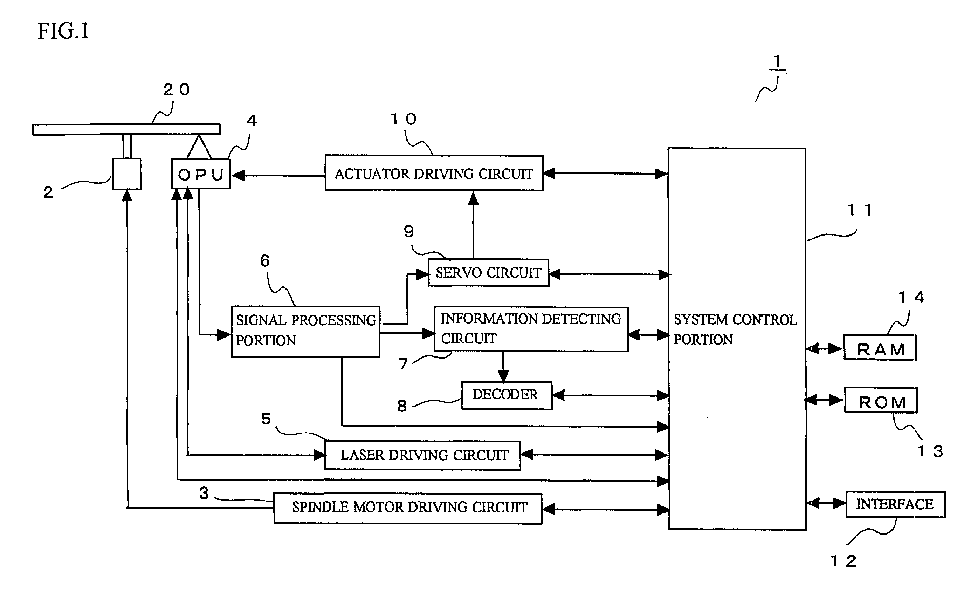

Fig. 1 is a block diagram to show a structure of an optical disc apparatus 1 according to the present embodiment. The optical disc apparatus 1 is designed such that reproducing of information on an optical disc 20 and recording of information on the optical disc 20 can be performed. The optical disc apparatus 1 is made to be applicable to three kinds of optical discs of a BD, a DVD, and a CD. Further, the optical disc apparatus 1 is made to be capable of performing recording and reproducing of a double layer optical disc about a BD.

Reference numeral 2 denotes a spindle motor, and the optical disc 20 is held in detachable manner by a chuck portion (not shown) which is disposed on upper portion of the spindle motor 2. The spindle motor 2 rotates continuously the optical disc 20 when recording and reproducing of information to and from the optical disc 20 is performed. Rotation control of the spindle motor 2 is performed by a spindle motor driving circuit 3.

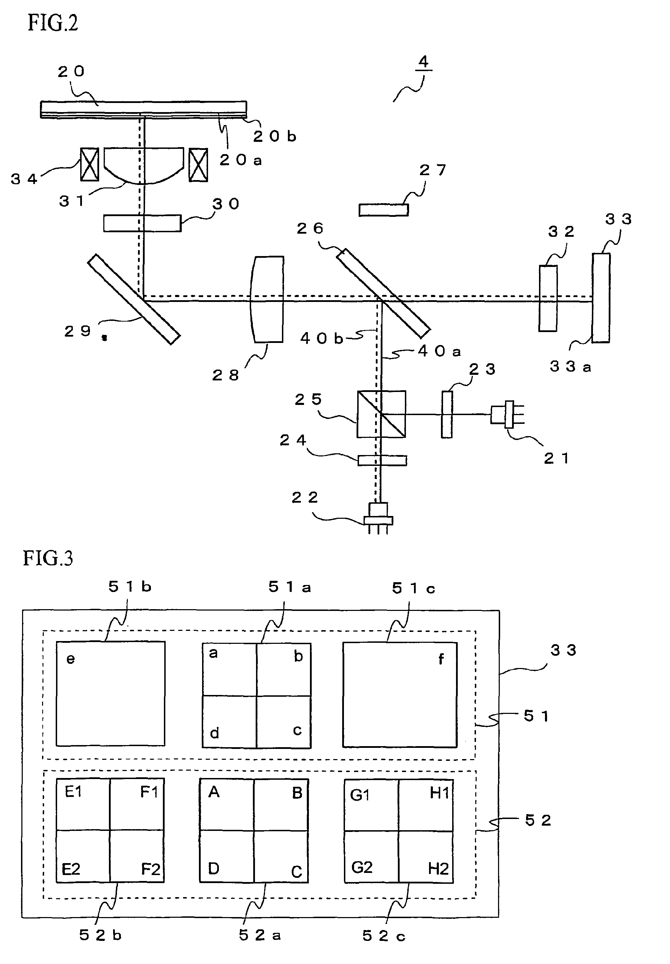

Reference numeral 4 denotes an optical pickup, and the optical pickup 4 irradiates the optical disc 20 with a laser beam which is emitted from a light source and makes it possible to record information on the optical disc 20 and reproduce information recorded on the optical disc 20. Fig. 2 is a schematic diagram to show an optical system of the optical pickup 4. As shown in Fig. 2, the optical pickup 4 is equipped with a first light source 21, a second light source 22, a first diffracting element 23, a second diffracting element 24, a dichroic prism 25, a half mirror 26, a light receiving element 27 for front monitoring, a collimator lens 28, an upstand mirror 29, a liquid crystal element 30, an objective lens 31, a cylindrical lens 32, and a photo detector 33. A structure of the optical system which forms the optical pickup is not limited to this example and various modifications can be introduced, of course.

The first light source 21 is a laser diode which emits a laser beam having single wavelength, and it emits the laser beam having wavelength of 405 nm band used for a BD. The second light source 22 is a two wavelength compatible laser diode (two wavelength laser) which emits laser beam for two wavelengths, it emits the laser beam having wavelength of 650 nm band used for a DVD, and the laser beam having wavelength of 780 nm band used for a CD.

The second light source 22 is a light source unit in which two light emitting points that emit laser beams having different wavelengths are disposed in vicinity to each other (for example, 110 $\mu$m). As a result, the two laser beams having different wavelengths which are emitted from the second light source 22 are in relation that their optical axes are shifted each other. Two optical axes 40a, 40b shown by solid line and dotted line in Fig. 2 show these shifted optical axes relation. Further, the optical axis of the laser beam which is emitted from the first light source 21 is adjusted by reflection by the dichroic prism 25 such that it agrees with the optical axis 40a of the laser beam for a DVD.

The light source unit forming the second light source 22 may be a monolithic laser which has a plurality of light emitting points that emit laser beams having different wavelengths in one chip, or a hybrid laser which is structured to have a plurality of light emitting points by integration of a plurality of laser chips having different wavelengths.

In the optical pickup 4, the laser beam which is emitted from the first light source 21 is diffracted by the first diffracting element 23 and the laser beam which is emitted from the second light source 22 is diffracted by the second diffracting element 24. As a result, the laser beams are divided into three beams of a main beam (zero order light) and two sub beams ($\pm$ first order light) respectively.

Each of the laser beam divided into the three beams passes the dichroic prism 25 (laser beam for a DVD or a CD) or it is reflected by the dichroic prism 25 (laser beam for a BD). Then, one part of the laser beam which is reflected by the half mirror 26 proceeds toward the optical disc 20, and the other part of the laser beam which passes the half mirror 26 proceeds toward the light receiving element 27 for front monitoring. The light receiving element 27 for the front monitoring detects laser power by receiving the laser beam, and transmits information to a laser driving circuit 5. The laser driving circuit 5 controls output power of the light sources 21, 22 based on the transmitted information in order to stabilize the laser power.

The laser beam which proceeds from the half mirror 26 to the optical disc 20, is converted into parallel light by the collimator lens 28, and it is reflected by the upstand mirror 29, then passes the liquid crystal element 30. The liquid crystal element 30 is an element which makes it possible to correct spherical aberration that is generated by difference in thickness of a protection layer which protects a recording layer of the optical disc 20, or the like. The liquid crystal element 30 performs the correction of the spherical aberration by controlling applying voltage to transparent electrodes (not shown) which sandwich liquid crystal (not shown). The correction of the spherical aberration is not limited to the liquid crystal element 30 and various modifications are possible such as a structure utilizing an expanding lens.

The laser beam which passes the liquid crystal element 30 is condensed by the objective lens 31 on the recording layer 20a (or 20b) of the optical disc 20 for image forming. The objective lens 31 is made movable, by an actuator 34 in a focusing direction which is parallel to the optical axis and a tracking direction which is parallel to a radial direction of the optical disc 20. The optical disc 20 shown in Fig. 2 is a double layer disc and it has two recording layers of a first layer 20a and a second layer 20b.

The laser beam which is condensed on the recording layer 20a (or 20b) by the objective lens 31 is reflected by the recording layer 20a (or 20b) and generates reflected light. The reflected light which passes the objective lens 31, the liquid crystal element 30, the upstand mirror 29, the collimator lens 28 in this order, passes the half mirror 26, the cylindrical lens 32 gives astigmatism to the light and the light is condensed on the photo detector 33. Fig. 3 is a schematic front view of a photo detector 33 which is included in the optical disc apparatus 1 according to the present embodiment when viewed from a detecting surface 33a side.

As shown in Fig. 3, two photo receiving regions of a photo receiving region 51 for a CD on which laser beam for a CD is condensed, and a photo receiving region 52 for a BD and a DVD on which laser beam for a BD and a DVD are condensed, are formed on the photo detector 33. Each of the photo receiving regions 51, 52 has three detecting cells (detecting cell group). The photo receiving region 51 for a CD is composed of a main beam detecting cell 51a which receives the main beam and sub beam detecting cells 51b, 51c which receive the sub beam. Similarly, the photo receiving region 52 for a BD and a DVD is composed of a main beam detecting cell 52a and sub beam detecting cells 52b, 52c.

The photo detector 33 converts a light signal which is detected by the respective detecting cells into an electric signal. Processing of the electric signal which is converted by the respective detecting cells will be explained later.

Now back to Fig. 1, the laser driving circuit 5 performs switching of the first light source 21 and the second light source 22 according to kind of the optical disc 20 which is loaded in the optical disc apparatus 1 and performs output power control of the laser beam which is emitted from the first light source 21 or the second light source 22 based on the information from the light receiving element 27 (See, Fig. 2) for the front monitoring.

The electric signal is supplied from the photo detector 33 (See, Fig. 2) to a signal processing portion 6. The signal processing portion 6 performs processing of the supplied electric signal to generate RF signal, focus error signal (FE signal), and tracking error signal (TE signal).

An information detecting circuit 7 performs processing such as waveform equalization on the RF signal which is supplied from the signal processing portion 6, and performs reading out of information which is recorded on the optical disc 20. The information which is read out by the information detecting circuit 7 is demodulated by a decoder 8. Reproduced signal which is demodulated is output to external instruments such as personal computer via an interface 12.

A servo circuit 9 performs generation of a focus driving signal and a tracking driving signal based on the FE signal and the TE signal which are generated by the signal processing portion 6.

An actuator driving circuit 10 controls driving of the actuator 34 (See, Fig. 2) on which the objective lens 31 (See, Fig. 2) is mounted, based on the signal such as the focus driving signal and the tracking driving signal which are supplied from the servo circuit 9. The actuator 34 drives the objective lens 31 in the focusing direction and the tracking direction to perform the focusing control and the tracking control.

A system control portion 11 having micro computers performs control processing adequately corresponding to required actions that should be performed by the respective portions of which the optical disc apparatus 1 is composed. In the system control portion 11, Read Only Memory (ROM) 13 and Random Access Memory (RAM) 14 are provided. In the ROM 13 various kinds of parameters and operating programs which are required for the system control portion 11 to perform various processing are stored. The RAM 14 is utilized as working area for the system control portion 11 and it is made also as recording area for various information which are required.

An outline of whole structure of the optical disc apparatus 1 is as above describe, and the optical disc apparatus 1 has a feature that it is structured to be capable of preventing that the stray light acts upon the servo signal as a disturbance when the double layer optical disc (in the present embodiment double layer optical disc of a BD) is reproduced. Hereinafter this point will be explained.

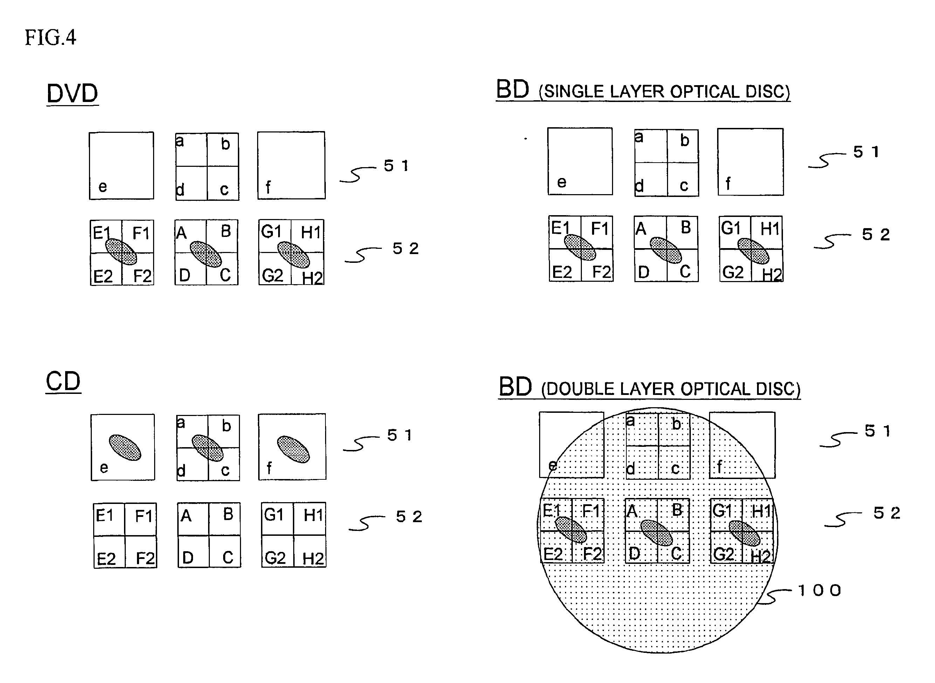

Fig. 4 is a diagram to show a state of light spot which is formed by reflected light from the optical disc 20 on the photo detector 33 when the optical disc apparatus 1 according to the present embodiment reproduces various kinds of optical discs 20 that the apparatus is compatible with. If the recording layer of the optical disc 20 is only one (See, DVD, CD, BD (single layer optical disc) shown in Fig. 4), the light spot which is formed on the photo detector 33 is only a light spot that the reflected light reflected by the reproducing target recording layer forms on a prescribed light receiving position of the photo detector 33.

By this reason, when one of these optical discs 20 is reproduced, it is possible to obtain servo signal by processing signal which is obtained by the photo detector 33 by known method without correction. As for a DVD or a BD (single layer optical disc), for example, the FE signal can be obtained by an astigmatism method, and the TE signal can be obtained by differential push pull method. Further, as for a CD, for example, the FE signal can be obtained by the astigmatism method, and the TE signal can be obtained by three beam method. Computing equations to obtain these FE signal and TE signal will be described below. Alphabets in the computing equations designate signals which are obtained in the respective regions of the detecting cells that are included in the respective photo receiving regions 51, 52.

For a case of a DVD and a BD (single layer optical disc);

$$\mathbf{FE} = (\mathbf{A} + \mathbf{C}) - (\mathbf{B} + \mathbf{D})$$

$$TE = (A + D) - (B + C) - k \cdot ((E1 + E2 + G1 + G2) - (F1 + F2 + H1 + H2))$$

where k is a coefficient and it is decided properly.
For a case of a CD;

$$FE = (a + c) - (b + d)$$

$$TE = e - f$$

On the other hand, for a case of the double layer optical disc 20 (See a BD (double layer optical disc) shown in Fig. 4) which has two layers of recording layers, reflected light (stray light) from a recording layer (for example, the second layer 20b (See, Fig. 2)) different from the reproducing target recording layer (for example, the first layer 20a (See, Fig. 2)) also forms a light spot 100 on the photo detector 33. The light spot 100 which is formed by the stray light is formed on a wide area of the photo detector 33, as shown in Fig. 4.

As a result, when the double layer optical disc 20 is reproduced, in addition to the light spot which is formed by the reflected light from the reproducing target recording layer, the light spot 100 which is formed by the stray light is also detected at the photo receiving region 52. Therefore, in the double layer optical disc, if the servo signal is obtained in the same manner as in the case of the single layer optical disc 20 as above described, there is a possibility that the servo action in the reproducing operation becomes inadequate by the disturbance of the stray light.

Because of this, it is necessary that the disturbance of the stray light must be eliminated when the servo signal is generated. Therefore, the optical disc apparatus 1 has a structure obtaining servo signal after detected signal obtained by the photo receiving region 52 for a BD and a DVD and including an offset component by the stray light (hereinafter referred to as "stray light offset component") is corrected (the stray light offset component is eliminated).

The elimination of the stray light offset component from the detected signal which is obtained in the photo receiving region 52 for a BD and a DVD, is achieved by performing a prescribed calculating process using a signal obtained in the photo receiving region 51 for a CD on ground that the light spot 100 of the stray light spreads as shown in Fig. 4 and is detected in the photo receiving region 51 for a CD.

The optical disc apparatus 1 has a structure eliminating only the stray light offset component of the detected signal obtained in the sub beam detecting cells 52b, 52c in the photo receiving region 52 for a BD and a DVD, not eliminating the stray light offset component of the detected signal obtained in the main beam detecting cell 52a. The reason is we consider that the light intensity of the sub beam is weaker than the main beam, the detected signals obtained in the sub beam detecting cells 52b, 52c are more largely effected by the disturbance of the stray light than the main beam detecting cell 52a and correction for the detected signal in cells 52b, 52c is inevitable.

However, the optical disc apparatus 1 may have a structure eliminating the stray light offset component of the detected signal which is obtained in the main beam detecting cell 52a in addition to the detected signals which are obtained in the sub beam detecting cells 52b, 52c.

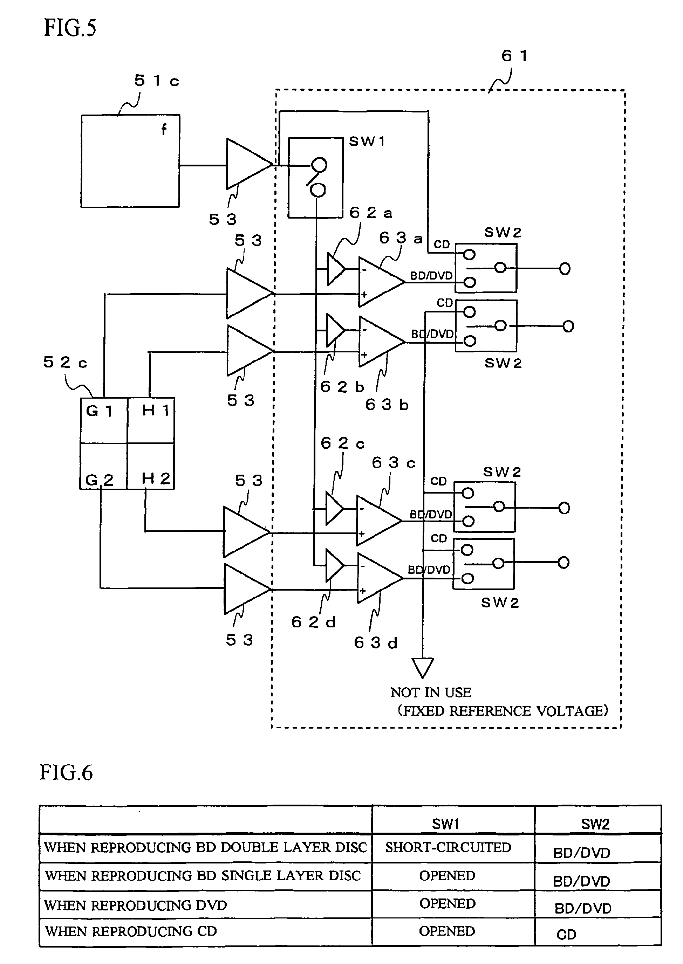

Hereinafter, detail of a structure of a calculating circuit to eliminate the stray light offset component that is included in the detected signals which are obtained in the sub beam detecting cells 52b, 52c in the photo receiving region 52 for a BD and a DVD using the detected signal which is obtained in the sub beam detecting cells 51b, 51c in the photo receiving region 51 for a CD in the optical disc apparatus 1 will be explained. Fig. 5 is a schematic diagram to show a structure of a part of an offset eliminating calculation circuit 61 which is included in the photo detector 33.

The offset eliminating calculation circuit (calculation processing portion) 61 is composed of two calculation circuits, a circuit which performs correction of the detected signal that is obtained in the sub beam detecting cell 52b using the detected signal which is obtained in the sub beam detecting cell 51b, and a circuit which performs correction of the detected signal that is obtained in the sub beam detecting cell 52c using the detected signal which is obtained in the sub beam detecting cell 51c. Because these two calculation circuits have the same circuit configuration except difference of sub beam detecting cells connected thereto, only the circuit configuration of the latter one is shown in Fig. 5, and explanation below will be given on only the latter one.

In the offset eliminating calculation circuit 61 shown in Fig. 5, a switch SW1 is a switch to change whether the elimination of the stray light offset component is performed or not. In the optical disc apparatus 1 it becomes necessary to eliminate the stray light offset component only when a BD (double layer optical disc) is reproduced. As a result, the switch SW1 is made short-circuited only when a BD (double layer optical disc) is reproduced, the switch SW1 is made opened in other cases, as shown in Fig. 6. Fig. 6 is a diagram to explain switching of the switches which are included in the offset eliminating calculation circuit 61.

In a case where the switch SW1 is made short-circuited, the detected signal which is detected in the sub beam detecting cell 51c, is amplified to a prescribed level by an amplifier 53 and is sent to gain control amplifiers (GCAs) 62a, 62b, 62c, 62d. The GCAs 62a to 62d perform weighting by multiplying prescribed coefficients by the sent signals respectively. Because the coefficients for performing the weighting vary in response to a configuration of the apparatus, they are decided for every apparatus when the apparatus is built up, for example.

The detected signals which pass the GCAs 62a to 62d are sent to differential units 63a to 63d, respectively. The detected signal which is obtained in a divided region G1 of the sub beam detecting cell 52c is also sent to the differential unit 63a after it is amplified to a prescribed level by the amplifier 53. Similarly, the detected signal which is obtained in a divided region H1 of the sub beam detecting cell 52c is also sent to the differential unit 63b after it is amplified to a prescribed level. The detected signal which is obtained in a divided region H2 of the sub beam detecting cell 52c is sent to the differential unit 63c after it is amplified to a prescribed level. The detected signal which is obtained in a divided region G2 of the sub beam detecting cell 52c is also sent to the differential unit 63d after it is amplified to a prescribed level.

In each of the differential units 63a to 63d, the detected signal which is sent from the sub beam detecting cell 51c (sent via the GCAs) is subtracted from the detected signal which is sent from the sub beam detecting cell 52c. As a result, the elimination of the stray light offset component is performed. The signals obtained after the calculation by the respective differential units 63a to 63d are sent to switches SW2.

In the present embodiment the GCAs are disposed before the respective differential units 63a to 63d, however, the present invention is not limited to the embodiment. That is, the plurality of GCAs may be put together to one for a part where the same coefficient is multiplied.

The switches SW2 are switches which are switched on ground that a reproducing target of the optical disc apparatus 1 is a BD or a DVD, or a CD. In a case where the switch SW1 is short-circuited, the switches SW2 are switched to the BD or the DVD side. The signal which passes each of the switches SW2 is sent to the signal processing portion 6 and used for generation of the servo signal and the RF signal.

In a case where a BD (double layer optical disc) is not reproduced by the optical disc apparatus 1, the switch SW1 is made open. In this case, if a CD is reproduced by the optical disc apparatus 1, the switches SW2 are switched to the CD side. Then, the detected signal which is obtained in the sub beam detecting cell 51c is sent to the signal processing portion 6 without undergoing any calculating process.

In a case where a BD (single layer optical disc) or a DVD is reproduced by the optical disc apparatus 1, the switches SW2 are switched to the BD or the DVD side. In this case, the detected signal which is obtained in the sub beam detecting cell 52c is sent to the signal processing portion 6 without undergoing any calculating process in the differential units 63a to 63d.

The switches SW1 and SW2 are structured to be changed in response to a kind of the optical disc which is reproduced by the optical disc apparatus 1 and the offset eliminating calculation circuit 61 is controlled by the system control portion 11. As a result, the offset eliminating calculation circuit 61 is mounted on the photo detector 33 in the present embodiment. However, structures such as mounting the offset eliminating calculation circuit 61 on the system control portion 11 may be possible. Further, because the system control portion 11 controls the offset eliminating calculation circuit 61, structures possible to change adequately the coefficients which are multiplied in the GCAs 62a to 62d or the like may be possible.

By structuring the offset eliminating calculation circuit 61 as above described, it becomes possible to perform the elimination of the stray light offset component if it is necessary. Then, servo operation can be performed adequately because the servo signal is calculated in a state where the stray light offset component is eliminated. In addition, the elimination of the stray light offset component can be performed without adding a special detecting cell. As a result, the structure of the optical disc apparatus 1 can be simplified, and further, increase of manufacturing cost can be suppressed.

The structure of the optical disc apparatus 1 is not limited to the present embodiment as described above and various modifications is possible without departing from an object of the present invention. That is, the present invention can be widely applicable to optical disc apparatus including a light source unit (in the present embodiment, two wavelength laser 22) in which a plurality of light emitting points emitting lights having different wavelengths are formed in vicinity, having a structure in which the photo receiving region on the photo detector is divided into a plurality of regions (in the present embodiment, the photo receiving region 51 for a CD and the photo receiving region 52 for a BD and a DVD) in response to a shift of the light emitting points.

Further, in the present embodiment described above, an object of the elimination of the stray light offset component is the double layer optical disc of a BD. However, the present invention should not limited to the disc, the optical disc apparatus according to the present invention may be structured to eliminate the stray light offset component which is generated when a multilayer optical disc having more than two recording layers is reproduced. Further, it may be structured to eliminate the stray light offset component which is generated by a multilayer optical disc of a DVD or the like as well as the multilayer optical disc of a BD (optical disc having more than two recording layers).

In addition, the present embodiment describes a structure eliminating the stray light offset component when the multilayer optical disc is reproduced. However, a structure eliminating the stray light offset component which is generated when the multilayer optical disc is recorded may be possible.

The optical disc apparatus in accordance with the present invention can perform servo control with eliminating an effect of the stray light which is generated when a multilayer optical disc is reproduced or the like. Further, the present invention can realize such structure with suppressing increase of manufacturing cost. As a result the present invention is very useful for an optical disc apparatus which is compatible to a multilayer optical disc.

**Claims**

1. An optical disc apparatus which can perform reproducing of a plurality of kinds of optical discs, the apparatus comprising:

   a light source unit in which a plurality of light emitting points that emit lights having different wavelengths each other are formed in vicinity;
   a condenser lens which condenses the light emitted from the light source unit on a recording layer of the optical disc;
   a photo detecting portion which receives the light condensed by the condenser lens and then reflected by the recording layer, a plurality of photo receiving regions are formed on the photo detecting portion to receive the reflected light in separate positions according to the respective wavelengths which are emitted from the light source unit; and
   a calculation processing portion, if a first photo receiving region is a photo receiving region which is essentially used to obtain a servo signal at reproduction of an optical disc that has a plurality of recording layers and a second photo receiving region is a photo receiving region not needed to be used essentially to obtain the servo signal among the plurality of photo receiving regions, the calculation processing portion performs a prescribed calculating process using a signal that is detected in the first photo receiving region and a signal that is detected in the second photo receiving region to perform correction of the signal that is detected in the first photo receiving region at the reproduction of the optical disc that has a plurality of recording layers.

2. The optical disc apparatus according to claim 1, **characterized in that**
   the light which is emitted from the light source unit is divided into a main beam and a sub beam and the beams are input to the condenser lens,
   each of the plurality of photo receiving regions is formed of a plurality of detecting cell groups to make it possible to receive the main beam and the sub beam separately, and
   the prescribed calculating process by the calculation processing portion is performed using only the signal that is detected in the detecting cell which receives the sub beam.

3. The optical disc apparatus according to claim 1 or claim 2, **characterized in that** the light source unit is a two wavelength laser and two of the photo receiving regions are formed in the photo detecting portion.

4. The optical disc apparatus according to claim 3, further comprising another light source which emits light having different wavelength than the light source unit, **characterized in that**
   the photo detecting portion is formed to receive the light which is emitted from the another light source and reflected by the recording layer in any one of the two photo receiving regions, and
   reproducing of the optical disc that has a plurality of recording layers is performed using at least the light which is emitted from the another light source.

FIG.1

RAM — 14

ROM — 13

INTERFACE — 12

1

11 — SYSTEM CONTROL PORTION

10 — ACTUATOR DRIVING CIRCUIT

9 — SERVO CIRCUIT

7 — INFORMATION DETECTING CIRCUIT

8 — DECODER

5 — LASER DRIVING CIRCUIT

SPINDLE MOTOR DRIVING CIRCUIT

6 — SIGNAL PROCESSING PORTION

4 — OPU

20

2

3

FIG.2

FIG.3

FIG.4

FIG.5

NOT IN USE
(FIXED REFERENCE VOLTAGE)

FIG.6

|  | SW1 | SW2 |
|---|---|---|
| WHEN REPRODUCING BD DOUBLE LAYER DISC | SHORT-CIRCUITED | BD/DVD |
| WHEN REPRODUCING BD SINGLE LAYER DISC | OPENED | BD/DVD |
| WHEN REPRODUCING DVD | OPENED | BD/DVD |
| WHEN REPRODUCING CD | OPENED | CD |

**European Patent Office**

## EUROPEAN SEARCH REPORT

Application Number

EP 07 02 3463

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 605 448 A (SONY CORP [JP]) 14 December 2005 (2005-12-14) * paragraphs [0012], [0013] * * paragraph [0113] - paragraph [0147] * * paragraph [0148] - paragraph [0158] * * figures 4-8 * | 1-4 | INV. G11B7/13 G11B7/09 ADD. G11B7/00 G11B7/125 |
| D,X | JP 2005 353252 A (TEAC CORP) 22 December 2005 (2005-12-22) * the whole document * | 1-4 | |
| A | US 2003/179680 A1 (PARK YOUNG-SUN [KR] ET AL) 25 September 2003 (2003-09-25) * paragraph [0057] - paragraph [0060] * * paragraph [0074] - paragraph [0080] * * paragraph [0083] * * figures 6,8A,8C * | 1-4 | |
| A | US 2002/047084 A1 (HAYASHI HIDEKI [JP] ET AL) 25 April 2002 (2002-04-25) * paragraph [0036] - paragraph [0042] * * figures 1-4 * | 1-4 | TECHNICAL FIELDS SEARCHED (IPC) G11B |

The present search report has been drawn up for all claims

| Place of search | Date of completion of the search | Examiner |
|---|---|---|
| The Hague | 29 February 2008 | Cornelussen, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 02 3463

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2008

| Patent document cited in search report | | Publication date | Patent family member(s) | | Publication date |
|---|---|---|---|---|---|
| EP 1605448 | A | 14-12-2005 | CN | 1755809 A | 05-04-2006 |
| | | | JP | 2005346882 A | 15-12-2005 |
| | | | KR | 20060048199 A | 18-05-2006 |
| | | | SG | 118350 A1 | 27-01-2006 |
| | | | US | 2005286360 A1 | 29-12-2005 |
| JP 2005353252 | A | 22-12-2005 | NONE | | |
| US 2003179680 | A1 | 25-09-2003 | CN | 1445762 A | 01-10-2003 |
| | | | JP | 2003288735 A | 10-10-2003 |
| | | | KR | 20030075464 A | 26-09-2003 |
| | | | TW | 240263 B | 21-09-2005 |
| US 2002047084 | A1 | 25-04-2002 | CN | 1348177 A | 08-05-2002 |
| | | | TW | 225243 B | 11-12-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005353252 A

- JP 2004303403 A